# EUROPÄISCHE PATENTSCHRIFT

(11) **EP 3 763 193 B1**
(45) Veröffentlichungstag und Bekanntmachung des Hinweises auf die Patenterteilung: **15.05.2024**
(21) Anmeldenummer: 20185124.3
(22) Anmeldetag: 10.07.2020
(51) Int. Cl.: A01D 57/20, A01D 84/00

(54) **ERNTEVORRICHTUNG**
HARVESTING DEVICE
DISPOSITIF DE RÉCOLTE

(30) Priorität: 10.07.2019 DE 102019118737
(43) Veröffentlichungstag der Anmeldung: 13.01.2021
(73) Patentinhaber: CLAAS Saulgau GmbH, 88348 Bad Saulgau (DE)
(72) Erfinder: Boll, Ulrich, 88348 Bad Saulgau (DE)

(56) Entgegenhaltungen:
- EP-A1- 2 789 223
- EP-B1- 2 979 529
- US-A1- 2014 260 168
- US-A1- 2015 020 492

## Beschreibung

Die Erfindung betrifft eine Erntevorrichtung, nämlich einen Merger oder Pickup-Schwader, nach dem Oberbegriff des Anspruchs 1.

Eine solche Erntevorrichtung ist aus EP 2 789 223 A1 bekannt.

Aus der EP 2 979 529 B1 ist eine als Merger ausgebildete Erntevorrichtung bekannt. Merger werden auch als Pickup-Schwader bezeichnet. Gemäß diesem Stand der Technik verfügt die als Merger ausgebildete Erntevorrichtung über einen Tragrahmen sowie über ein Fahrwerk. Ferner verfügt die als Merger ausgebildete Erntevorrichtung über als Pickup ausgebildete Aufnahmeorgane zum Aufnehmen von Erntegut sowie über als Bandförderer ausgebildete Querfördereinrichtungen zum Querfördern des aufgenommenen Ernteguts. Der Tragrahmen verfügt über einen Längsträger sowie über Querträger, wobei die Aufnahmeorgane und Querfördereinrichtungen an den Querträgern aufgenommen sind. Die Aufnahmeorgane sowie Querförderreinrichtungen sind klappbar, um die als Merger ausgebildete Erntevorrichtung zwischen einer Arbeitsstellung und einer Transportstellung zu überführen.

Dann, wenn eine als Merger ausgebildete Erntevorrichtung ihre Arbeitsstellung einnimmt und über ein Zugfahrzeug über einen zu bearbeitenden Untergrund gezogen wird, bereitet es bislang Schwierigkeiten, bei einem unebenen Untergrund das Erntegut vollständig aufzunehmen und sicher über die Querfördereinrichtungen zu transportieren. Es besteht daher Bedarf an einer als Merger oder Pickup-Schwader ausgebildeten Erntevorrichtung, die einfach an Unebenheiten des zu bearbeitenden Untergrunds angepasst werden kann, um eine optimale Erntequalität zu erreichen, um also sämtliches Erntegut optimal aufzunehmen und quer zu fördern.

Hiervon ausgehend liegt der vorliegenden Erfindung die Aufgabe zugrunde, eine neuartige, als Merger oder Pickup-Schwader ausgebildete, Erntevorrichtung zu schaffen.

Diese Aufgabe wird durch eine Erntevorrichtung nach Anspruch 1 gelöst. Erfindungsgemäß sind die zu den unterschiedlichen Seiten des Tragrahmens angeordneten Aufnahmeorgane und Querfördereinrichtungen in Arbeitsstellung um jeweils eine sich in Längsrichtung erstreckende Schwenkachse schwenkbar, wobei die jeweilige Schwenkachse im Bereich des Fahrwerks benachbart zum Übergabebereich angeordnet ist.

Durch die erfindungsgemäße Ausgestaltung der Erntevorrichtung kann selbst bei unebenem zu bearbeitendem Untergrund das Erntegut optimal aufgenommen und quergefördert werden. Die sich in Längsrichtung erstreckenden Schwenkachsen, um welche die Aufnahmeorgane und Querfördereinrichtungen bei der Bodenanpassung schwenkbar sind, sind dabei benachbart zum Übergabebereich zwischen den in Querrichtung nebeneinander positionierten Querfördereinrichtungen angeordnet. Dies hat den Vorteil, dass bei der Bodenanpassung so gut wie kein Höhenversatz zwischen den Querfördereinrichtungen im Übergabebereich verursacht wird. Dadurch wird der Gutfluss des Ernteguts im Übergabebereich nicht gestört.

Die jeweilige Schwenkachse ist in Längsrichtung gesehen zwischen den Rädern des Fahrwerks angeordnet, um bei der automatischen Bodenanpassung den Transport des Ernteguts im Übergabebereich nicht zu beeinträchtigen.

Nach einer vorteilhaften Weiterbildung weist die Erntevorrichtung Begrenzungseinrichtungen für die Schwenkbewegung der zu den unterschiedlichen Seiten des Tragrahmens angeordneten Aufnahmeorgane und Querfördereinrichtungen auf. Auch die Begrenzungseinrichtungen dienen dem Zweck bei der automatischen Bodenanpassung den Transport des Ernteguts im Übergabebereich optimal zu gestalten.

Nach einer vorteilhaften Weiterbildung ist das Fahrwerk relativ zum Tragrahmen zur Überführung der Erntevorrichtung zwischen einer Arbeitsstellung und Vorgewendestellung ein- und ausfahrbar. Vorzugsweise ist zwischen Fahrwerk und Tragrahmen ein Dämpfer angeordnet. Der Dämpfer ist in der Arbeitsstellung der Erntevorrichtung aktiv und kann ebenfalls zur optimalen Bodenanpassung genutzt werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Rückansicht auf eine als Merger oder Pickup-Schwader ausgebildete Erntevorrichtung in Arbeitsstellung;
- Fig. 2: eine Rückansicht auf die als Merger oder Pickup-Schwader ausgebildete Erntevorrichtung in einer Vorgewendestellung;
- Fig. 3: eine Rückansicht auf die als Merger oder Pickup-Schwader ausgebildete Erntevorrichtung in Arbeitsstellung mit Bodenanpassung;
- Fig. 4: eine Rückansicht auf die als Merger oder Pickup-Schwader ausgebildete Erntevorrichtung in Arbeitsstellung mit Bodenanpassung;
- Fig. 5: eine Draufsicht auf die als Merger oder Pickup-Schwader ausgebildete Erntevorrichtung;
- Fig. 6: eine perspektivische Ansicht von oben auf die als Merger oder Pickup-Schwader ausgebildete Erntevorrichtung;
- Fig. 6a: das Detail X aus der Fig. 6;
- Fig. 7: eine perspektivische Ansicht von unten auf die als Merger oder Pickup-Schwader ausgebildete Erntevorrichtung;
- Fig. 8: eine Seitenansicht auf die als Merger oder Pickup-Schwader ausgebildete Erntevorrichtung in der Vorgewendestellung;
- Fig. 9: eine Seitenansicht auf die als Merger oder Pickup-Schwader ausgebildete Erntevorrichtung in Arbeitsstellung;
- Fig. 10: eine Draufsicht auf den linken Teil der Erntevorrichtung;
- Fig. 11: eine Draufsicht auf den linken Teil der Erntevorrichtung in ausgefahrener Position.

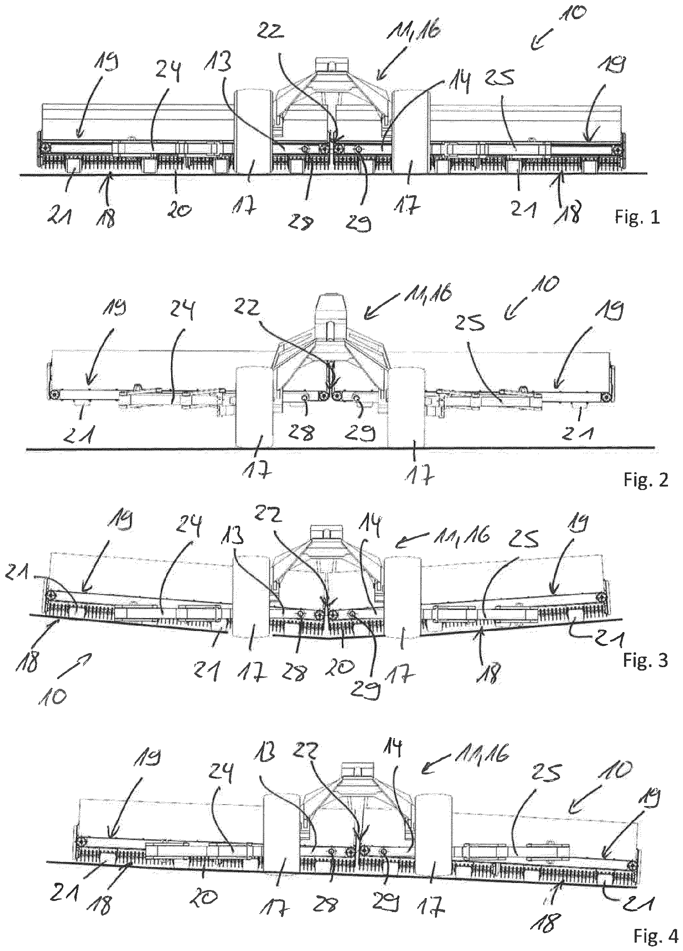

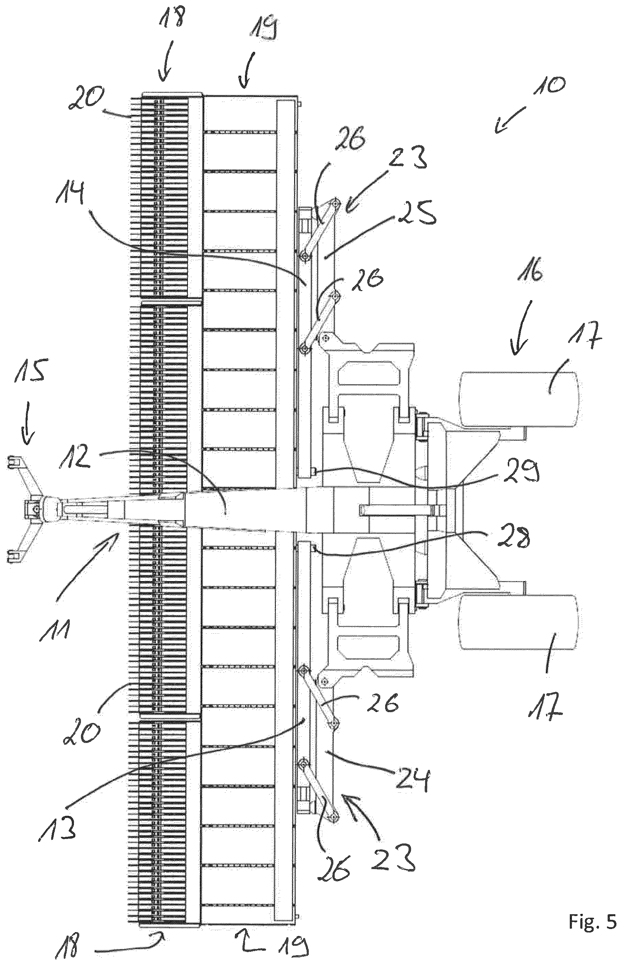

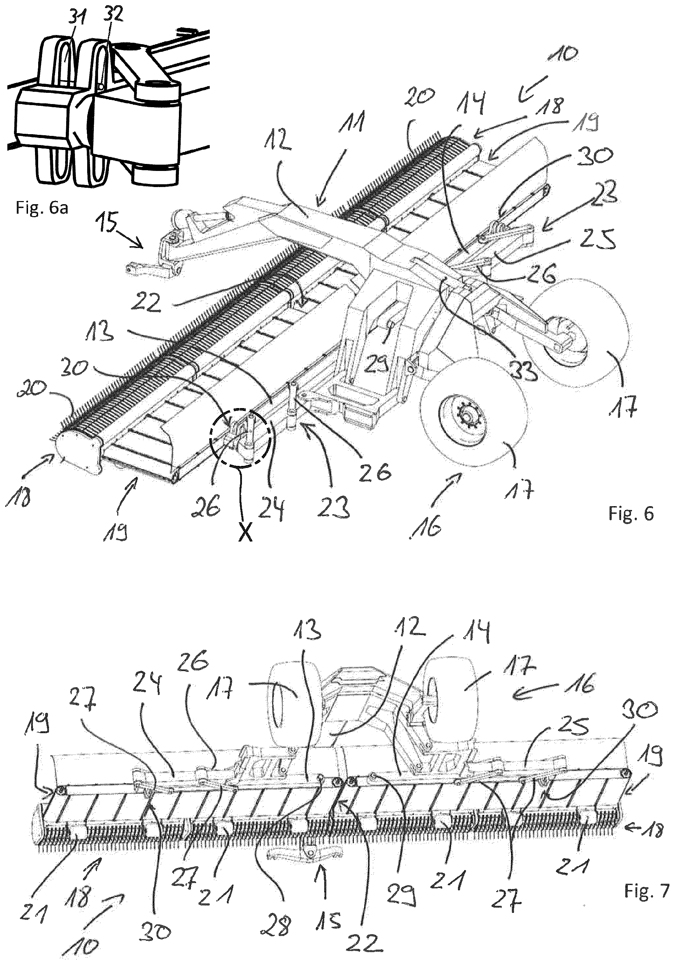

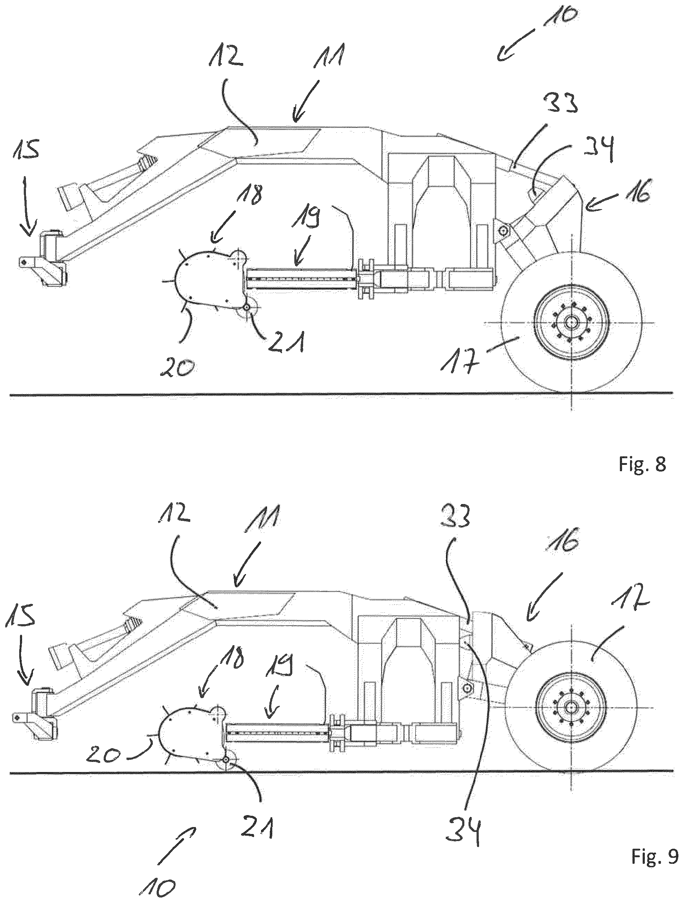

Die Erfindung betrifft eine als Merger ausgebildete Erntevorrichtung. Eine solche Erntevorrichtung wird auch als Pickup-Schwader bezeichnet. Fig. 1 bis 4 zeigen Rückansichten, Fig. 5 eine Draufsicht, Fig. 6 und 7 jeweils eine perspektivische Ansicht und Fig. 8 und 9 jeweils Seitenansichten einer solchen als Merger ausgebildeten Erntevorrichtung 10.

Die Erntevorrichtung 10 verfügt über einen Tragrahmen 11 mit einem Längsträger 12 sowie Querträgern 13, 14, 24, 25. Über den Längsträger 12, nämlich einer am vorderen Ende des Längsträgers 12 ausgebildeten Kupplungseinrichtung 15, ist die Erntevorrichtung 10 an ein nicht gezeigtes Zugfahrzeug ankoppelbar, um vom Zugfahrzeug entlang eines zu bearbeitenden Untergrunds gezogen zu werden. Der Längsträger 12 erstreckt sich dabei in Zugrichtung bzw. Ernterichtung, Die Querträger 13, 14 erstrecken sich quer oder senkrecht hierzu.

Die Erntevorrichtung 10 verfügt weiterhin über ein Fahrwerk 16 mit Rädern 17. Das Fahrwerk 16 wird auch als Hauptfahrwerk bezeichnet.

Über die Räder 17 des Fahrwerks 16 stützt sich sowohl in einer Arbeitsstellung (siehe Fig. 1, 3, 4, 5, 6, 7, 9) als auch in einer Transportstellung (nicht gezeigt) sowie in einer Vorgewendestellung (siehe Fig. 2, 8) die als Merger ausgebildete Erntevorrichtung 10 auf einem zu bearbeitenden bzw. zu befahrenden Untergrund ab.

Die Erntevorrichtung 10 verfügt weiterhin über Aufnahmeorgane 18 sowie Querfördereinrichtungen 19.

Die Aufnahmeorgane 18 sind als sogenannte Pickup ausgebildet und dienen dem Aufnehmen von Erntegut vom zu bearbeitenden Untergrund. Zu einer ersten Seite des Längsträgers 12 ist ein erstes Aufnahmeorgan 18 an dem Querträger 13 aufgenommen, an einer zweiten Seite des Längsträgers 12 ist ein zweites Aufnahmeorgan 18 an dem Querträger 14 aufgenommen.

Die Aufnahmeorgane 18 verfügen dabei über Aufnahmezinken 20, die zum Aufnehmen des Ernteguts vom Boden um eine sich in Querrichtung erstreckende Achse angetrieben werden. Jedes der Aufnahmeorgane 18 stützt sich in der Arbeitsstellung der Erntevorrichtung 10 über Tasträder 21 auf dem zu bearbeitenden Untergrund ab. In einer Vorgewendestellung (siehe Fig. 2, 9) sind die Tasträder 21 vom zu bearbeitenden Untergrund abgehoben.

Wie bereits ausgeführt, verfügt die Erntevorrichtung 10 zusätzlich zu den Aufnahmeorganen 18 über die Querfördereinrichtungen 19.

Die Querfördereinrichtungen 19 sind als Bandförderer ausgebildet, wobei über die Querfördereinrichtungen 19 das über die Aufnahmeorgane 18 vom zu bearbeitenden Untergrund aufgenommene Erntegut in einer sich zur Längsrichtung quer bzw. senkrecht erstreckenden Querförderrichtung transportierbar ist.

Zu der ersten Seite des Längsträgers 12 ist eine erste Querfördereinrichtung 19 an dem ersten Querträger 13 aufgenommen, zu der zweiten Seite des Längsträgers 12 ist eine zweite Querfördereinrichtung 19 an dem zweiten Querträger 14 aufgenommen, wobei beide dieser Querfördereinrichtungen 19 als Bandförderer ausgeführt sind.

Wie den Zeichnungen entnommen werden kann, sind in Ernterichtung bzw. Zugrichtung der Erntevorrichtung gesehen, die Querfördereinrichtungen 19 hinter den Aufnahmeorganen 18 angeordnet.

In den in den Figuren gezeigten Stellungen der Erntevorrichtung 10 sind die beiden als Bandförderer ausgebildeten Querfördereinrichtungen 19, die an unterschiedlichen Seiten des Längsträgers 12 angeordnet sind, in Querrichtung gesehen unter Minimierung des Abstands zwischen den Querfördereinrichtungen 19 und unter Ausbildung eines Übergabebereichs 22 zwischen den Querfördereinrichtungen 19 zusammengeschoben bzw. aufeinander zu bewegt. Bei in gleicher Richtung angetriebenen Querfördereinrichtungen 19 kann das Erntegut über die gesamte Quererstreckung der Erntevorrichtung 10 auf eine Seite derselben gefördert werden. In diesem Fall wird dann das Erntegut seitlich neben der Erntevorrichtung 10 zu einem Schwad auf dem Untergrund abgelegt.

Im Unterschied hierzu ist es auch möglich, dass jede der als Bandförderer ausgebildeten Querfördereinrichtungen 19 jeweils in Querrichtung nach außen vom Längsträger 12 weg verlagert ist, wodurch dann unter Aufhebung des Übergabebereichs 22 zwischen den Querfördereinrichtungen 19 ein Spalt zwischen den Querfördereinrichtungen 19 ausgebildet ist (nicht gezeigt). In diesem Fall kann dann bei gegenläufig angetriebenen Querfördereinrichtungen 19 im Bereich dieses Spalts das Erntegut zu einem sogenannten Mittenschwad vereinigt und auf dem Untergrund angelegt werden. Bei dieser Verlagerung der Querfördereinrichtungen 19 werden auch die Aufnahmeorgane 18 verlagert.

Wie oben bereits ausgeführt, sind im Bereich beider Querträger 13, 14 jeweils eine Querfördereinrichtung 19 und ein Aufnahmeorgan 18 aufgenommen, wobei bei der obigen Ausbildung oder Aufhebung des Übergabebereichs 22 die Querträger 13, 14 zusammen mit den an denselben aufgenommenen Querfördereinrichtungen 19 und Aufnahmeorganen 18 über die insbesondere in Fig. 5, 6 und 7 gezeigten Lenkerkinematik 23 relativ zu weiteren Querträgern 24, 25 des Tragrahmens 11 translatorisch in Querrichtung verlagerbar sind. Jede Lenkerkinematik 23 verfügt über obere Lenker 26 und untere Lenker 27, die an den jeweiligen Querträgern 13, 24 bzw. 14, 25 gelenkig angreifen, um die translatorische Verschiebbarkeit derselben in Querrichtung zu gewährleisten.

Um bei der Bearbeitung des zu bearbeitenden Untergrunds in der Arbeitsstellung der Erntevorrichtung 10 ein optimales Bearbeitungsergebnis zu ermöglichen, sind zur Bodenanpassung der Erntevorrichtung, insbesondere zum Ausgleich von Unebenheiten des zu bearbeitenden Untergrunds, die Aufnahmeorgane 18 und die Querfördereinrichtungen 19 in der Arbeitsstellung um sich in Längsrichtung erstreckende Schwenkachsen 28, 29 schwenkbar. Die zu den unterschiedlichen Seiten des Tragrahmens 12 angeordneten Aufnahmeorgane 18 und Querfördereinrichtungen 19 sind in der Arbeitsstellung um jeweils eine sich in Längsrichtung erstreckende Schwenkachse 28, 29 schwenkbar. Die Schwenkbewegung der Aufnahmeorgane 18 und Querfördereinrichtungen 19 erfolgt relativ zu den Querträgern 13, 14, an welchen dieselben aufgenommen sind.

Die jeweilige Schwenkachse 28, 29 ist im Bereich des Fahrwerks 16 benachbart zum Übergabebereich 22 der Querfördereinrichtungen 19 angeordnet sind. Dann, wenn die Aufnahmeorgane 18 und Querfördereinrichtungen 19 um diese Schwenkachsen 28, 29 bei der Bodenanpassung geschwenkt werden, bildet sich kein oder allenfalls ein minimaler Höhenversatz zwischen den Querfördereinrichtungen 19 im Übergabebereich 22 aus. Dies kann insbesondere Fig. 3 und 4 entnommen werden, welche die Erntevorrichtung 10 bei der Bodenanpassung zeigen, nämlich in Fig. 3 bei dem Bearbeiten einer kuhlenartigen Vertiefung im zu bearbeitenden Untergrund und in Fig. 4 bei der Bearbeitung eines zu einer Seite hinabfallenden Untergrunds.

Die zu einer Seite des Tragrahmens 12 angeordneten Aufnahmeorgane 18 und Querfördereinrichtung 19 sind zur Bodenanpassung gegenüber den zu der anderen Seite des Tragrahmens 12 angeordneten Aufnahmeorgane 18 und Querfördereinrichtung 19 um die jeweilige Schwenkachse 28, 29 unabhängig voneinander schwenkbar. Dies zeigt insbesondere Fig. 3.

Wie den Figuren entnommen werden kann, ist in Längsrichtung gesehen die jeweilige Schwenkachse 28, 29, um welche die Aufnahmeorgane 18 und Querfördereinrichtungen 19 in der Arbeitsstellung zur Bodenanpassung schwenkbar sind, zwischen den Rädern 17 des Fahrwerks 16 angeordnet. Bevorzugt ist dabei eine Anordnung, in welcher die Schwenkachsen 28, 29 in Längsrichtung gesehen jeweils in der Mitte zwischen dem Übergabebereich 22 und dem jeweiligen benachbarten Rad 17 des Fahrwerks 16 angeordnet sind, wobei bevorzugt die jeweilige Schwenkachse 28, 29 vom Übergabebereich 22 einen kleineren Abstand aufweist als zum jeweiligen benachbarten Rad 17 des Fahrwerks 16. Es ist jedoch auch möglich, dass ein Abstand der jeweiligen Schwenkachse 28, 29 von dem Übergabebereich 22 größer ist als ein Abstand der jeweiligen Schwenkachse 28, 29 vom jeweiligen benachbarten Rad 17 des Fahrwerks 16, wobei jedoch die Schwenkachsen 28, 29 immer zwischen den Rädern 17 des Fahrwerks 16 positioniert sind, nämlich dann, wenn die Querfördereinrichtungen 19 in Querrichtung gesehen unter Ausbildung des Übergabebereichs 22 in Richtung auf den Längsträger 12 zusammengeschoben sind und demnach einen minimalen Abstand in Querrichtung aufweisen.

Die Schwenkbewegung des jeweiligen Aufnahmeorgans 18 sowie der jeweiligen Querfördereinrichtung 19 wird durch eine jeweilige Begrenzungseinrichtung begrenzt, wobei die beispielhafte Begrenzungseinrichtung 30 ein Langloch 31 und einen in dem Langloch 31 geführten Stift 32 aufweist (siehe Detail X in Fig. 6a). Das Langloch 31 der jeweiligen Begrenzungseinrichtung 30 kann Bestandteil der jeweiligen Querfördereinrichtung 19 und der Stift 32 derselben kann Bestandteil des angrenzenden Querträgers 13, 14 sein. Alternativ kann der Stift 32 der jeweiligen Begrenzungseinrichtung 30 Bestandteil der jeweiligen Querfördereinrichtung 19 und das Langloch 31 derselben, Bestandteil eines angrenzenden Querträgers 13, 14 sein.

Um die Erntevorrichtung von der insbesondere in Fig. 1, 3, 4 und 9 gezeigten Arbeitsstellung in die in Fig. 2 und 8 gezeigte Vorgewendestellung zu überführen, ist das Fahrwerk 16 relativ zum Tragrahmen 11 ein- und ausfahrbar, und zwar mithilfe eines Hydraulikzylinders 33. Im eingefahrenen Zustand des Hydraulikzylinders 33 nimmt die Erntevorrichtung 10 die Arbeitsstellung und im ausgefahrenen Zustand des Hydraulikzylinders 33 die Vorgewendestellung ein.

Zwischen dem Fahrwerk 16 und dem Tragrahmen 11 ist ein Dämpfer 34 ausgebildet, der gemäß Fig. 9 in der Arbeitsstellung der Erntevorrichtung 10 aktiv ist. Der Dämpfer 34 ist vorzugsweise auch in der Transportstellung, insbesondere bei einer Transportfahrt, aktiv. Bei diesem Dämpfer 34 handelt es sich um ein gummielastisch verformbares Element, welches am Fahrwerk 16 montiert ist und sich in der Arbeitsstellung am Tragrahmen 11 abstützt. Hierdurch wird im Betrieb die Arbeitsstellung von Aufnahmeorganen 18 und Querfördereinrichtungen 19 stabilisiert, insbesondere dadurch, dass über die Räder 17 des Fahrwerks 16 auf das Traggestell 11 einwirkende Kräfte und Momente gedämpft werden.

Der Dämpfer 34 kann alternativ am Tragrahmen 11 oder an einem Längsträger angeordnet werden und statt gummielastischen Elementen, können alternativ Federn, pneumatische Federelemente oder ähnliches vorgesehen werden.

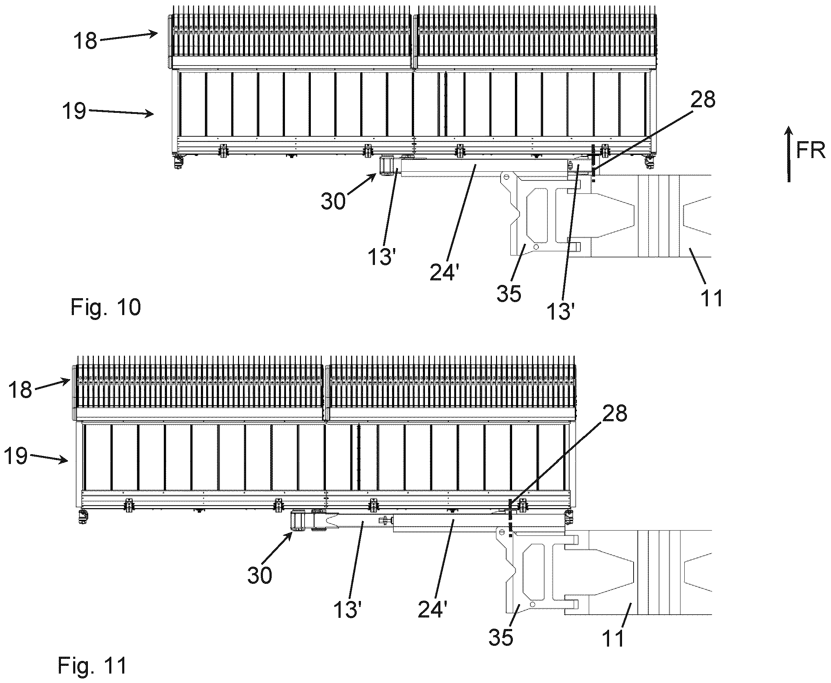

Alternativ zur oben beschriebenen Lenkerkinematik 23 kann auch ein Teleskop zur translatorischen Verlagerung der Aufnahmeorgane 18 sowie der Querfördereinrichtungen 19 vorgesehen werden. In Fig. 10 und Fig. 11 ist ein entsprechendes Ausführungsbeispiel an der linken Maschinenseite dargestellt. Das Aufnahmeorgan 18 sowie die Querfördereinrichtung 19 sind an einem Querträger 13' über die Schwenkachse 28 sowie die Begrenzungseinrichtung 30 angelenkt und der Querträger 13' ist längsverschiebbar an einem weiteren Querträger 24' aufgenommen. Der weitere Querträger 24' umschließt den längsverschiebbaren Querträger 13' vorzugsweise lediglich im oberen und unteren Bereich. In der Fig. 10 ist der Querträger 13' komplett eingefahren dargestellt und es ist erkennbar, dass der Querträger 13' an beiden Längsenden des Querträgers 24' übersteht. In der Fig. 11 ist der Querträger 13' etwa komplett ausgefahren dargestellt. Der Querträger 24' ist über eine Hochachse an einem Zwischenrahmen 35 angelenkt, der wiederum über eine etwa in Fahrt- oder Ernterichtung FR verlaufende Achse am Tragrahmen 11 angeordnet ist.

Die Erfindung erlaubt bei einer als Merger oder Pickup-Schwader ausgebildeten Erntevorrichtung in der Arbeitsstellung derselben eine optimale Bodenanpassung.

### Bezugszeichenliste

- 10: Erntevorrichtung
- 11: Tragrahmen
- 12: Längsträger
- 13: Querträger
- 13': Querträger
- 14: Querträger
- 15: Kupplungseinrichtung
- 16: Fahrwerk
- 17: Rader
- 18: Aufnahmeorgane
- 19: Querfördereinrichtung
- 20: Aufnahmezinken
- 21: Tastrad
- 22: Übergabebereich
- 23: Lenkerkinematik
- 24: Querträger
- 24': Querträger
- 25: Querträger
- 26: Lenker
- 27: Lenker
- 28: Schwenkachse
- 29: Schwenkachse
- 30: Begrenzungseinrichtung
- 31: Langloch
- 32: Stift
- 33: Hydraulikzylinder
- 34: Dämpfer
- 35: Zwischenrahmen
- FR: Fahrt-/Ernterichtung

## Patentansprüche

1. Erntevorrichtung, nämlich Merger oder Pickup-Schwader,
mit einem einen Längsträger (12) und Querträger (13, 14, 24, 25) aufweisenden Tragrahmen (11),
mit einem Räder (17) aufweisenden Fahrwerk (16),
mit als Pickup ausgebildeten Aufnahmeorganen (18) zum Aufnehmen von Erntegut,
wobei zu einer ersten Seite des Längsträgers (12) ein Aufnahmeorgan (18) und zu einer zweiten Seite des Längsträgers (12) ein weiteres Aufnahmeorgan (18) jeweils an einem Querträger (13, 14) aufgenommen ist,
mit als Bandförderer ausgebildeten Querfördereinrichtungen (19) zum Fördern des aufgenommenen Ernteguts in einer quer zu einer Längsrichtung verlaufenden Querförderrichtung, wobei zu einer ersten Seite des Längsträgers (12) eine Querfördereinrichtung (19) und zu einer zweiten Seite des Längsträgers (12) eine weitere Querfördereinrichtung (19) an dem jeweiligen Querträger (13, 14) aufgenommen ist, und wobei zwischen den zu unterschiedlichen Seiten des Längsträgers (12) angeordneten Querfördereinrichtungen (19) ein Übergabebereich (22) für das Erntegut ausbildbar ist, wobei die zu den unterschiedlichen Seiten des Tragrahmens (12) angeordneten Aufnahmeorgane (18) und Querfördereinrichtungen (19) in Arbeitsstellung um jeweils eine sich in Längsrichtung erstreckende Schwenkachse (28, 29) relativ zu dem Querträger (13, 14), an welchem dieselben aufgenommen sind, schwenkbar sind, wobei die jeweilige Schwenkachse (28, 29) im Bereich des Fahrwerks (16) benachbart zum Übergabebereich (22) angeordnet ist,
**dadurch gekennzeichnet, dass** in Längsrichtung gesehen die jeweilige Schwenkachse (28, 29) zwischen den Rädern (17) des Fahrwerks (16) angeordnet ist.

2. Erntevorrichtung nach Anspruch 1, **dadurch gekennzeichnet, dass** in Längsrichtung gesehen die jeweilige Schwenkachse (28, 29) in der Mitte zwischen dem Übergabebereich (22) und dem jeweiligen benachbarten Rad (17) des Fahrwerks (16) angeordnet ist.

3. Erntevorrichtung nach Anspruch 1, **dadurch gekennzeichnet, dass** in Längsrichtung gesehen die jeweilige Schwenkachse (28, 29) zwischen dem Übergabebereich (22) und dem jeweiligen benachbarten Rad (17) des Fahrwerks (16) angeordnet ist, derart, dass ein Abstand der jeweiligen Schwenkachse (28, 29) von dem Übergabebereich (22) kleiner ist als ein Abstand der jeweiligen Schwenkachse (28, 29) von dem jeweiligen benachbarten Rad (17) des Fahrwerks (16).

4. Erntevorrichtung nach Anspruch 1, **dadurch gekennzeichnet, dass** in Längsrichtung gesehen die jeweilige Schwenkachse (28, 29) zwischen dem Übergabebereich (22) und dem jeweiligen benachbarten Rad (17) des Fahrwerks (16) angeordnet ist, derart, dass ein Abstand der jeweiligen Schwenkachse (28, 29) von dem Übergabebereich (22) größer ist als ein Abstand der jeweiligen Schwenkachse (28, 29) von dem jeweiligen benachbarten Rad (17) des Fahrwerks (16).

5. Erntevorrichtung nach einem der Ansprüche 1 bis 4, **gekennzeichnet durch** Begrenzungseinrichtungen (30) für die Schwenkbewegung der zu den unterschiedlichen Seiten des Tragrahmens (12) angeordneten Aufnahmeorgane (18) und Querfördereinrichtungen (19).

6. Erntevorrichtung nach Anspruch 5, **dadurch gekennzeichnet, dass** die jeweilige Begrenzungseinrichtung (30) einen in einem Langloch (31) geführten Stift (32) umfasst.

7. Erntevorrichtung nach Anspruch 6, **dadurch gekennzeichnet, dass** das Langloch (31) der jeweiligen Begrenzungseinrichtung (30) Bestandteil der jeweiligen Querfördereinrichtung (19) und der Stift (32) derselben Bestandteil eines angrenzenden Querträgers (13, 14) ist.

8. Erntevorrichtung nach Anspruch 6, **dadurch gekennzeichnet, dass** der Stift (32) der jeweiligen Begrenzungseinrichtung (30) Bestandteil der jeweiligen Querfördereinrichtung (19) und das Langloch (31) derselben Bestandteil eines angrenzenden Querträgers (13, 14) ist.

9. Erntevorrichtung nach einem der Ansprüche 1 bis 8, **dadurch gekennzeichnet, dass** das Fahrwerk (16) relativ zum Tragrahmen (11) zur Überführung der Erntevorrichtung zwischen einer Arbeitsstellung und Vorgewendestellung ein- und ausfahrbar ist.

10. Erntevorrichtung nach einem der Ansprüche 1 bis 9, **gekennzeichnet durch** einen Dämpfer (34) zwischen Fahrwerk (16) und Tragrahmen (11).

## Claims

1. Harvesting apparatus, specifically merger or pickup windrower,
with a load-bearing frame (11) which has a longitudinal carrier (12) and transverse carriers (13, 14, 24, 25),
with a chassis (16) which has wheels (17),
with receiving members (18) which are in the form of pick-ups and serve for receiving harvested crop,
wherein one receiving member (18) is received on a first side of the longitudinal carrier (12) and a further receiving member (18) is received on a second side of the longitudinal carrier (12), in each case on a transverse carrier (13, 14),
with transverse conveying devices (19) which are in the form of belt conveyors and serve for conveying the received harvested crop in a transverse conveying direction which extends transversely to a longitudinal direction, wherein one transverse conveying device (19) is received on a first side of the longitudinal carrier (12) and a further transverse conveying device (19) is received on a second side of the longitudinal carrier (12), on the respective transverse carrier (13, 14), and wherein a transfer region (22) for the harvested crop is able to be formed between the transverse conveying devices (19) which are arranged on different sides of the longitudinal carrier (12), wherein, in a working position, the transverse conveying devices (19) and receiving members (18) arranged on different sides of the load-bearing frame (12) are pivotable about a respective pivot axis (28, 29), extending in the longitudinal direction, relative to the transverse carrier (13, 14) on which they are received, wherein the respective pivot axis (28, 29) is arranged in the region of the chassis (16) adjacent to the transfer region (22),
**characterized in that,** as seen in the longitudinal direction, the respective pivot axis (28, 29) is arranged between the wheels (17) of the chassis (16) .

2. Harvesting apparatus according to Claim 1, **characterized in that,** as seen in the longitudinal direction, the respective pivot axis (28, 29) is arranged midway between the transfer region (22) and the respective adjacent wheel (17) of the chassis (16) .

3. Harvesting apparatus according to Claim 1, **characterized in that,** as seen in the longitudinal direction, the respective pivot axis (28, 29) is arranged between the transfer region (22) and the respective adjacent wheel (17) of the chassis (16) in such a way that a distance of the respective pivot axis (28, 29) from the transfer region (22) is smaller than a distance of the respective pivot axis (28, 29) from the respective adjacent wheel (17) of the chassis (16).

4. Harvesting apparatus according to Claim 1, **characterized in that,** as seen in the longitudinal direction, the respective pivot axis (28, 29) is arranged between the transfer region (22) and the respective adjacent wheel (17) of the chassis (16) in such a way that a distance of the respective pivot axis (28, 29) from the transfer region (22) is greater than a distance of the respective pivot axis (28, 29) from the respective adjacent wheel (17) of the chassis (16).

5. Harvesting apparatus according to one of Claims 1 to 4, **characterized by** limiting devices (30) for the pivoting movement of the transverse conveying devices (19) and receiving members (18) arranged on different sides of the load-bearing frame (12).

6. Harvesting apparatus according to Claim 5, **characterized in that** the respective limiting device (30) comprises a pin (32) which is guided in a slot (31) .

7. Harvesting apparatus according to Claim 6, **characterized in that** the slot (31) of the respective limiting device (30) is a constituent part of the respective transverse conveying device (19), and the pin (32) thereof is a constituent part of an adjacent transverse carrier (13, 14).

8. Harvesting apparatus according to Claim 6, **characterized in that** the pin (32) of the respective limiting device (30) is a constituent part of the respective transverse conveying device (19), and the slot (31) thereof is a constituent part of an adjacent transverse carrier (13, 14).

9. Harvesting apparatus according to one of Claims 1 to 8, **characterized in that** the chassis (16) is retractable and extendable relative to the load-bearing frame (11) for transferring the harvesting apparatus between a working position and a headland position.

10. Harvesting apparatus according to one of Claims 1 to 9, **characterized by** a damper (34) between chassis (16) and load-bearing frame (11).

## Revendications

1. Dispositif de récolte, à savoir andaineur à tapis ou de ramassage,
comportant un cadre porteur (11) présentant un support longitudinal (12) et des supports transversaux (13, 14, 24, 25),
comportant un châssis (16) présentant des roues (17), comportant des organes de ramassage (18) réalisés sous forme de ramasseur pour ramasser le produit récolté,
un organe de ramassage (18) étant reçu sur un premier côté du support longitudinal (12) et un autre organe de ramassage (18) étant prévu sur un deuxième côté du support longitudinal (12), respectivement sur un support transversal (13, 14),
comportant des appareils de transport transversal (19) réalisés sous forme de transporteurs à bande pour transporter le produit récolté ramassé dans une direction de transport transversale s'étendant transversalement à une direction longitudinale, un appareil de transport transversal (19) étant reçu sur un premier côté du support longitudinal (12) et un autre appareil de transport transversal (19) étant reçu sur un deuxième côté du support longitudinal (12) sur le support transversal respectif (13, 14), et une région de transfert (22) pour le produit récolté pouvant être réalisée entre les appareils de transport transversal (19) disposés sur des côtés différents du support longitudinal (12), les organes de ramassage (18) et appareils de transport transversal (19) disposés sur des côtés différents du cadre porteur (12) pouvant, dans la position de travail, pivoter autour d'un axe de pivotement (28, 29) s'étendant dans la direction longitudinale respectivement par rapport au support transversal (13, 14) sur lequel ils sont reçus, l'axe de pivotement respectif (28, 29) étant disposé dans la région du châssis (16) de manière adjacente à la région de transfert (22), **caractérisé en ce que**, vu dans la direction longitudinale, l'axe de pivotement respectif (28, 29) est disposé entre les roues (17) du châssis (16) .

2. Dispositif de récolte selon la revendication 1, **caractérisé en ce que**, vu dans la direction longitudinale, l'axe de pivotement respectif (28, 29) est disposé au centre entre la région de transfert (22) et la roue adjacente respective (17) du châssis (16).

3. Dispositif de récolte selon la revendication 1, **caractérisé en ce que**, vu dans la direction longitudinale, l'axe de pivotement respectif (28, 29) est disposé entre la région de transfert (22) et la roue adjacente respective (17) du châssis (16), de telle sorte qu'une distance de l'axe de pivotement respectif (28, 29) à la région de transfert (22) soit inférieure à une distance de l'axe de pivotement respectif (28, 29) à la roue adjacente respective (17) du châssis (16).

4. Dispositif de récolte selon la revendication 1, **caractérisé en ce que**, vu dans la direction longitudinale, l'axe de pivotement respectif (28, 29) est disposé entre la région de transfert (22) et la roue adjacente respective (17) du châssis (16), de telle sorte qu'une distance de l'axe de pivotement respectif (28, 29) à la région de transfert (22) soit supérieure à une distance de l'axe de pivotement respectif (28, 29) à la roue adjacente respective (17) du châssis (16).

5. Dispositif de récolte selon l'une des revendications 1 à 4, **caractérisé par** des dispositifs de limitation (30) pour le mouvement de pivotement des organes de ramassage (18) et appareils de transport transversal (19) disposés sur des côtés différents du cadre porteur (12).

6. Dispositif de récolte selon la revendication 5, **caractérisé en ce que** le dispositif de limitation respectif (30) comprend une goupille (32) guidée dans un trou oblong (31).

7. Dispositif de récolte selon la revendication 6, **caractérisé en ce que** le trou oblong (31) du dispositif de limitation respectif (30) fait partie de l'appareil de transport transversal respectif (19) et sa goupille (32) fait partie d'un support transversal adjacent (13, 14) .

8. Dispositif de récolte selon la revendication 6, **caractérisé en ce que** la goupille (32) du dispositif de limitation respectif (30) fait partie de l'appareil de transport transversal respectif (19) et son trou oblong (31) fait partie d'un support transversal adjacent (13, 14) .

9. Dispositif de récolte selon l'une des revendications 1 à 8, **caractérisé en ce que** le châssis (16) peut être rentré et sorti par rapport au cadre porteur (11) pour le transfert du dispositif de récolte entre une position de travail et une position de tournière.

10. Dispositif de récolte selon l'une des revendications 1 à 9, **caractérisé par** un amortisseur (34) entre le châssis (16) et le cadre porteur (11).
